# EUROPÄISCHE PATENTSCHRIFT

(11) **EP 1 340 128 B1**
(45) Veröffentlichungstag und Bekanntmachung des Hinweises auf die Patenterteilung: **31.01.2007**
(21) Anmeldenummer: 01995661.4
(22) Anmeldetag: 23.11.2001
(51) Int. Cl.: G05B 19/418, H04L 12/44, H04L 12/40

(54) **VERTEILEN VON DATEN**
DISTRIBUTION OF DATA
DISTRIBUTION DE DONNEES

(30) Priorität: 05.12.2000 DE 10060607; 22.09.2001 DE 10146864
(43) Veröffentlichungstag der Anmeldung: 03.09.2003
(73) Patentinhaber: Hirschmann Electronics GmbH & Co. KG, 72654 Neckartenzlingen (DE)
(72) Erfinder: SCHENKYR, Rainer, 73278 Schlierbach (DE)
(74) Vertreter: Thul, Hermann
(86) Internationale Anmeldenummer: PCT/EP2001/013645
(87) Internationale Veröffentlichungsnummer: WO 2002/046932

(56) Entgegenhaltungen:
- EP-A- 0 710 904
- WO-A-00/20935
- US-A- 5 469 150
- ANDY SWALES: "Topology Considerations for Modbus/Ethernet Automation Networks" WHITE PAPER LAN CONTROLS INC., [Online] 25. Januar 2000 (2000-01-25) - 28. März 2000 (2000-03-28), Seiten 1-7, XP002214792 Gefunden im Internet: <URL:http://www.lancontrols.com/info/Topol ogyConsiderations.htm> [gefunden am 2002-09-25]
- POTTER D: "USING ETHERNET FOR INDUSTRIAL I/O AND DATA ACQUISITION" IMTC/99 PROCEEDINGS OF THE 16TH IEEE INSTRUMENTATION AND MEASUREMENT TECHNOLOGY CONFERENCE. VENICE, IT, MAY 24 - 26, 1999, IEEE INSTRUMENTATION AND MEASUREMENT TECHNOLOGY CONFERENCE (IMTC), NEW YORK, NY: IEEE, US, Bd. 3, 24. Mai 1999 (1999-05-24), Seiten 1492-1496, XP000871813 ISBN: 0-7803-5277-7
- "Actuator Sensor Interface Technical Overview" AS-I TRADE ORGANIZATION, [Online] - 1998 Seiten 1-15, XP002214793 Gefunden im Internet: <URL:http://www.as-interface.com/aboutasi/ As-ibook.pdf> [gefunden am 2002-09-25]
- GE FANUC AUTOMATION: "Ethernet connection via the serial port on a PLC" ENGINEERINGTALK.COM, [Online] - 13. Oktober 2000 (2000-10-13) Seiten 1-2, XP002214794 Milton Keynes, UK Gefunden im Internet: <URL:http://www.engineeringtalk.com/news/g ef/gef122.html> [gefunden am 2002-09-25]
- "Versamax SE Ethernet bridge" GE FANUC AUTOMATION PRODUCT BROCHURE, [Online] XP002214795 Gefunden im Internet: <URL:http://www.geindustrial.com/products/ brochures/GFA-226.pdf> [gefunden am 2002-09-25]
- PROF. HANS SCHEITLIN: "Das Aktor-Sensor Interface" SPECIFICATION, [Online] 1998, Seiten 1-10, XP002214796 Solothurn, Schweiz Gefunden im Internet: <URL:http://www.as-interface.net/schweiz/p df/asi-info.pdf> [gefunden am 2002-09-25]

## Beschreibung

### Technisches Gebiet

Die Erfindung betrifft einen Abzweiger für ein Netzwerk gemäß den Merkmalen des Oberbegriffs des Patentanspruchs 1.

### Stand der Technik

Zur Kommunikation zwischen speicherprogrammierbaren Steuerungen (SPS) und Ein-/Ausgabe-Einheiten im industriellen Bereich, z. B. innerhalb einer Maschine, werden in bekannter Weise Feldbussysteme (wie Profibus oder Aktor-/Sensor-Interfacebus) eingesetzt. Solche Feldbussysteme können auf zwei Arten realisiert werden:

Jedes Endgerät besitzt zwei Anschlußpunkte für die Feldbusverbindung, wobei die Verkabelung somit direkt von Gerät zu Gerät erfolgt und eines der Geräte an der speicherprogrammierbaren Steuerung angeschlossen ist. Die zweite Möglichkeit besteht darin, daß das Feldbussystem eine Hauptleitung aufweist, in welchem sogenannte Abzweigpunkte an den entsprechenden Anschlußstellen für die Endgeräte angeordnet sind, wobei das jeweilige Endgerät an seinem zugehörigen Abzweigpunkt angeschlossen ist.

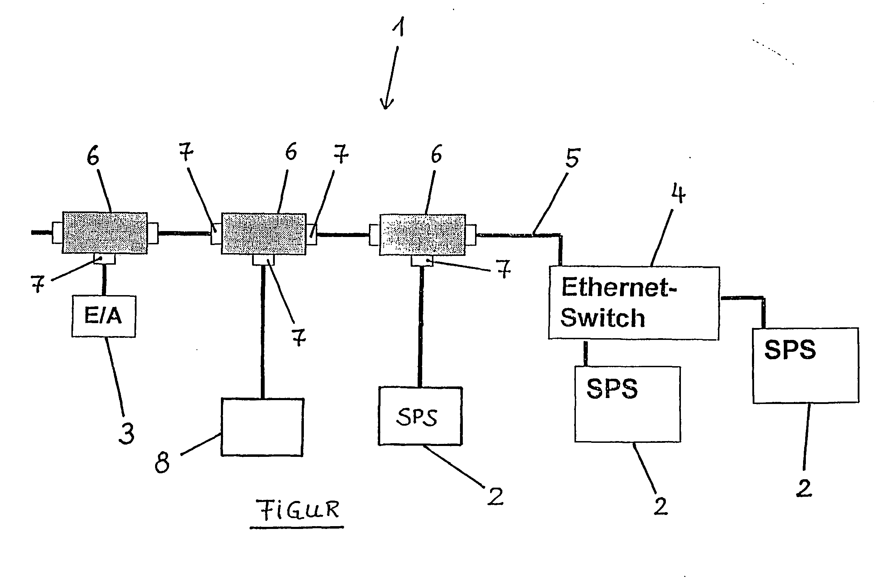

Aus der gattungsbildenden US 5,469,150 ist ein Netzwerk bekannt, bei dem mehrere Endgeräte (Sensoren, Aktuatoren, speicherprogrammierbare Steuerungen) über Busleitungen innerhalb eines Netzwerkes miteinander verbunden sind. Der Anschluss der Endgeräte an die Busleitung erfolgt über einen Abzweiger (T-Connector). Diese Abzweiger sind als passive Abzweiger ausgebildet. Das Endgerät selber wird durch einfache Kontaktierung mehrere Leitungen in dem T-Connector an die Busleitung angeschlossen. Hier ist der Abzweiger (s. Figur 1, die Bezugsziffern 15, 17 sowie die Figur 11, die Bezugsziffer 754) als passiver Abzweiger ausgebildet. Bei diesen Abzweigern stellt sich die Frage nach einer Stromversorgung nicht. Außerdem beschäftigt sich die US 5,469,150 nur mit einer Datenübertragung nach dem CAN-Protokoll, wobei Hinweise auf eine Übertragung nach dem Ethernet-Protokoll nicht offenbart sind. Ebensowenig sind diesem amerikanischen Patent konkrete Hinweise auf die Ausführung der Anschlüsse des Abzweigers zu entnehmen.

Das Dokument Andy Swales: "Topologie considerations for modbus/ethernet automation networks" beschreibt eine Datenübertragung nach dem Ethernet-Protokoll, zeigt aber nicht die Ausgestaltung der Abzweiger als aktive Abzweiger und deren Stromversorgung und ebensowenig die Ausführung der Anschlüsse des Abzweigers.

Die weitere Druckschrift Potter, D: "Using Ethernet for industrial I/O and data acquisition" zeigt lediglich, dass Endgeräte an einer Busleitung angeschlossen sein können und dass hierbei das Ethernet-Protokoll Verwendung findet. Die Ausgestaltung der Abzweiger als aktive Abzweiger, die Problematik der Stromversorgung von aktiven Abzweigern und die konkrete Ausgestaltung der Anschlüsse des aktiven Abzweigers können diesem Dokument nicht entnommen werden.

Solche Feldbussysteme haben sich in der Praxis zwar bewährt, wobei aufgrund der maximal möglichen Übertragungsrate von bis zu 10 Megabit pro Sekunde die Verarbeitungsgeschwindigkeit und das Datenvolumen für heutige Anwendungszwecke nicht mehr ausreichend ist. Die geringen Übertragungsraten haben ihre Ursache darin, daß die Schnittstellen der Endgeräte bzw. die Abzweigpunkte in passiver Bauweise realisiert sind, so daß eine Erhöhung der Datenmenge bzw. der Verarbeitungsgeschwindigkeit mit diesen Komponenten nicht möglich ist.

### Darstellung der Erfindung

Der Erfindung liegt daher die Aufgabe zugrunde, einen Abzweiger für ein entsprechendes Netzwerk zur Verbindung mindestens einer speicherprogrammierbaren Steuerung mit zumindest einer Ein-/Ausgabe-Einheit zu schaffen, der bei hohen Übertragungsraten in rauher und industrieller Umgebung zuverlässig arbeitet. Weiterhin soll der Abzweiger im Netzwerk einfach und schnell sowie zuverlässig angeschlossen werden können.

Diese Aufgabe ist durch die Merkmale des Patentanspruchs 1 gelöst.

Erfindungsgemäß ist vorgesehen, daß der Abzweiger als aktiver Abzweiger ausgebildet ist, wobei eine Stromversorgung der aktiven Abzweiger entweder über die Busleitung oder über eine separate Versorgungsleitung erfolgt und die Anschlüsse des aktiven Abzweigers in Schnellanschlußtechnik ausgeführt sind.
Aufgrund der aktiven Abzweiger lassen sich wesentlich größere Datenmengen in kürzerer Zeit übertragen und verarbeiten, als dies mit den passiven Abzweigern möglich wäre. Weiter ist der Verteiler in der Lage, den gesamten Datenstrom, der zwischen den jeweiligen Ein-/Ausgabeeinheiten und der zumindest einen speicherprogrammierbaren Steuerung fließt, zu organisieren. Dazu ist in besonders vorteilhafter Weise der zumindest eine Verteiler entweder derart ausgebildet, daß er Daten an einen bestimmten aktiven Abzweiger sendet oder von diesem erhält oder daß er mit Adressen versehene Daten auf die Busleitung schickt und der jeweilige aktive Abzweiger die mit seiner Adresse versehenen Daten empfängt. Gleiches gilt umgekehrt, das heißt, daß ein jeweiliger Abzweiger, an dem mindestens ein Endgerät (Ein-/Ausgabe-Einheit) angeschlossen ist, die hier vorliegenden Daten adressiert und an die zugehörige speicherprogrammierbare Steuerung über den Verteiler schickt.

Außerdem sind die Anschlüsse des jeweiligen aktiven Abzweigers in Schnellanschlußtechnik ausgeführt. Neben den schon bekannten und zum Einsatz gekommenen Steckverbindungen bietet sich die Schnellanschlußtechnik an, da diese weniger aufwendig und einfacher zu handhaben ist. Während Steckverbindungen dazu ausgelegt sind, die jeweilige Kontaktierung, z. B. bei einem Umbau des Netzwerkes, zu lösen und wieder neu herzustellen, erfolgt die Schnellanschlußtechnik im Regelfall lediglich einmal, nämlich bei der Montage des Netzwerkes. Da nur eine einmalige Kontaktierung erforderlich ist, kann diese einfacher ausfallen (z. B. durch die Schneid/Klemmkontaktierung), so daß die Materialkosten und der Montageaufwand gering gehalten werden kann.

Mit einem solchen Netzwerk lassen sich aufgrund der aktiven Bauweise der Abzweiger und des Verteilers, insbesondere des Ethernet-Switches, besonders hohe Übertragungsgeschwindigkeiten (beispielsweise bis zu 100 Megabit pro Sekunde) realisieren. Der aktive Abzweiger hat darüber hinaus den Vorteil, daß er im Zusammenspiel mit dem Verteiler den bisherigen Feldbus mit seinen passiven Abzweigern ersetzen kann. Damit kann in besonders vorteilhafter Weise die bisherige Feldbus-Vernetzung durch die hier angeführte Ethernet-Vernetzung ersetzt werden, ohne daß neue Endgeräte oder speicherprogrammierbare Steuerungen erforderlich werden.

In Weiterbildung der Erfindung hat der jeweilige aktive Abzweiger mindestens drei Anschlüsse. Über den ersten Anschluß ist der Abzweiger mit dem Verteiler oder mit einem weiteren Abzweiger verbunden. An dem zweiten Anschluß kann ebenfalls ein Verteiler oder ein weiterer Abzweiger angeschlossen sein. An dem dritten Anschluß ist dann das jeweilige Endgerät (Ein-/Ausgabe-Einheit) angeschlossen, wobei es sich nicht zwangsläufig um eine Ein-/Ausgabe-Einheit handeln muß, sondern der Anschluß lediglich eines Sensors oder lediglich eines Aktors oder eines PC's ist ebenfalls möglich. Damit ist eine stemartige Vernetzung, gegebenenfalls auch mehrere Netzwerke, möglich.

### Kurze Beschreibung der Zeichnung

Ein beispielhaftes erfindungsgemäßes Netzwerk, auf das die Erfindung jedoch nicht beschränkt ist, ist in der Figur gezeigt.

### Wege zur Ausführung der Erfindung

Mit der Bezugsziffer 1 ist ein Netzwerk bezeichnet, bei dem es sich um ein sogenanntes Ethernet-Netzwerk handelt. Zumindest eine speicherprogrammierbare Steuerung 2 (SPS), wobei im Regelfall mehr als eine Steuerung vorhanden ist, sowie zumindest eine Ein-/Ausgabe-Einheit 3, wobei im Regelfall mehr als eine solche Einheit vorhanden ist, sind Bestandteile des Netzwerkes 1. Erfindungsgemäß ist nun vorgesehen, daß die speicherprogrammierbaren Steuerungen 2 einerseits an einem Verteiler 4, insbesondere direkt, angeschlossen sind. Von dem Verteiler 4 führt eine Busleitung 5, wobei gegebenenfalls auch mehrere Busleitung an dem Verteiler 4 angeschlossen sein können, über aktive Abzweiger 6 zu den jeweiligen Ein-/Ausgabe-Einheiten 3, An dem letzten aktiven Abzweiger 6 kann ein Busabschluß angeschlossen werden oder in diesem betreffenden Abzweiger 6 integriert sein. Die aktiven Abzweiger 6 verfügen in dem hier gezeigten Ausführungsbeispiel jeweils über Anschlüsse 7, wobei die einzelnen Abzweiger 6 auch eine unterschiedliche Anzahl von Anschlüssen 7 aufweisen können. Der erste Abzweiger 6 ist mit seinem ersten Anschluß über die Busleitung 5 an dem Verteiler 4, bei dem es sich um einen Switch, eine SPS oder ein beliebiges Endgerät (z.B. PC) handeln kann, angeschlossen, während der zweite Anschluß an einen weiteren Abzweiger 6 geht. Der dritte Anschluß des ersten aktiven Abzweigers 6 ist mit einer weiteren SPS 2 -Einheit verbunden. An dem zweiten Abzweiger 6 ist beipielsweise ein Sensor 8 (oder Aktuator) und an dem letzten Abzweiger 6 eine Ein- und Ausgabeeinheit 3 angeschlossen. Es können auch mehr oder weniger als drei Abzweiger 6 vorhanden sein. Diese Anschlüsse 7 sind in besonders vorteilhafter Weise in Schnellanschlußtechnik ausgeführt. Darüber hinaus können alle Komponenten oder ein Teil der Komponenten des Netzwerkes 1 entsprechend dem Einsatzgebiet in Schutztechnik (insbesondere in IP 65167-Schutztechnik) ausgelegt sein. Die Stromversorgung der aktiven Abzweiger 6 erfolgt über die Busleitung 5, ausgehend vom Verteiler 4 aus, der eine integrierte Stromversorgung (Netzteil) aufweist. Alternativ dazu ist es denkbar, in die Busleitung 5 über zumindest eine Einspeisungsstelle die Stromversorgung einzuspeisen, die die Abzweiger 6 mit Spannung versorgt. Dies hat den Vorteil, daß die Busleitung 5 zur Stromversorgung und Datenübertragung genutzt wird, so daß die Installation einer separaten Stromversorgungsfeitung entfällt. Daneben ist aber auch die Trennung von Busleitung 5 und Stromversorgung denkbar. Beispielsweise können auch mindestens ein Abzweiger 6 oder mehrere oder alle Abzweiger 6 eine eigene Stromversorgung aufweisen.

## Patentansprüche

1. Abzweiger (6) für ein mehrere über eine Busleitung (5) verbundene Endgeräte, insbesondere speicherprogrammierbare Steuerungen (2), aufweisendes Netzwerk (1), wobei der Abzweiger (6) zumindest drei Anschlüsse (7) aufweist, von denen mindestens einer an der Busleitung (5) angeschlossen ist und zumindest einer der Anschlüsse (7) mit einem Endgerät verbunden ist, **dadurch gekennzeichnet, dass** der Abzweiger (6) als aktiver Abzweiger (6) ausgebildet ist, wobei eine Stromversorgung des aktiven Abzweigers (6) entweder über die Busleitung (5) oder über eine separate Versorgungsleitung erfolgt und, die Anschlüsse (7) des aktiven Abzweigers (6) in Schnellanschlußtechnik ausgeführt sind.

2. Abzweiger (6) nach Anspruch 1, **dadurch gekennzeichnet, dass** die Busleitung (5) zur Einspeisung einer Stromversorgung an zumindest einer Stelle eine Einspeisungsstelle aufweist.

3. Abzweiger (6) nach einem der vorhergehenden Ansprüche, **dadurch gekennzeichnet, dass** ein Verteiler (4), an dem der Abzweiger (6) angeschlossen ist, derart ausgebildet ist, dass er Daten an einen bestimmten aktiven Abzweiger (6) sendet oder von diesem erhält.

4. Abzweiger (6) nach Anspruch 3, **dadurch gekennzeichnet, dass** der Verteiler (4) derart ausgebildet ist, dass er mit Adressen versehene Daten auf die Busleitung (5) schickt und der jeweilige aktive Abzweiger (6) die mit seiner Adresse versehenen Daten empfängt.

5. Abzweiger (6) nach einem der vorhergehenden Ansprüche 3 oder 4, **dadurch gekennzeichnet, dass** die Verteiler die Daten entsprechend der Zieladresse vermitteln oder reine Verteiler (Hubs) sind.

6. Abzweiger (6) nach einem der Ansprüche 3 bis 5, **dadurch gekennzeichnet, dass** der Verteiler (4) ein Ethernet-Switch ist.

7. Abzweiger (6) nach einem der vorhergehenden Ansprüche, **dadurch gekennzeichnet, dass** der Abzweiger (6) zum Austausch von Daten im Ethernet-Datenformat (Ethemet-Protokoll) ausgebildet ist.

## Claims

1. Directional tap (6) for a network (1) which has a plurality of terminals which are connected via a bus line (5), in particular programmable logic controllers (2), with the directional tap (6) having at least three connections (7), at least one of which is connected to the bus line (5) and at least one of the connections (7) is connected to a terminal, **characterized in that** the directional tap (6) is in the form of an active directional tap (6), with a power supply for the active directional tap (6) being provided either via the bus line (5) or via a separate supply line, and with the connections (7) of the active directional tap (6) being designed on the basis of a quick-connect technique.

2. Directional tap (6) according to Claim 1, **characterized in that** the bus line (5) has a feed point for feeding a power supply to at least one point.

3. Directional tap (6) according to one of the preceding claims, **characterized in that** a hub (4), to which the directional tap (6) is connected, is designed in such a manner that it sends data to a specific active directional tap (6), or receives data from it.

4. Directional tap (6) according to Claim 3, **characterized in that** the hub (4) is designed in such a manner that it sends data provided with addresses to the bus line (5), and the respective active directional tap (6) receives the data provided with its address.

5. Directional tap (6) according to one of the preceding Claims 3 or 4, **characterized in that** the hubs transmit the data in accordance with the destination address, or are pure hubs.

6. Directional tap (6) according to one of Claims 3 to 5, **characterized in that** the hub (4) is an Ethernet switch.

7. Directional tap (6) according to one of the preceding claims, **characterized in that** the directional tap (6) is designed to interchange data in the Ethernet data format (Ethernet protocol).

## Revendications

1. Dérivateur (6) pour un réseau (1) comportant plusieurs terminaux reliés par une ligne de bus (5), notamment des commandes programmables à mémoire (2), le dérivateur (6) présentant au moins trois raccordements (7) dont au moins un est raccordé à la ligne de bus (5) et dont au moins un des raccordements (7) est raccordé à un terminal, **caractérisé en ce que** le dérivateur (6) est réalisé sous la forme de dérivateur actif, une alimentation électrique du dérivateur actif (6) étant réalisée soit par l'intermédiaire de la ligne de bus (5), soit par l'intermédiaire d'une ligne d'alimentation séparée et que les raccordements (7) du dérivateur actif (6) sont exécutés par connectique rapide.

2. Dérivateur (6) selon la revendication 1, **caractérisé en ce que** la ligne de bus (5) présente à un endroit au moins, un emplacement de distribution pour distribuer une alimentation électrique

3. Dérivateur (6) selon une des revendications précédentes, **caractérisé en ce qu'**un répartiteur (4) auquel le dérivateur (6) est raccordé, est réalisé de telle sorte qu'il envoie des données vers un dérivateur actif (6) défini ou qu'il en reçoive de celui-ci.

4. Dérivateur (6) selon la revendication 3, **caractérisé en ce que** le répartiteur (4) est réalisé de telle sorte qu'il envoie vers la ligne de bus (5) des données pourvues d'adresses, et que le dérivateur actif (6) correspondant reçoive les données pourvues de son adresse.

5. Dérivateur (6) selon une des revendications précédentes 3 ou 4, **caractérisé en ce que** les répartiteurs transmettent les données correspondant à l'adresse de la cible ou qu'ils sont de purs répartiteurs (Hubs).

6. Dérivateur (6) selon une des revendications 3 à 5, **caractérisé en ce que** le répartiteur (4) est un switch Ethernet.

7. Dérivateur (6) selon une des revendications précédentes, **caractérisé en ce que** le dérivateur (6) est réalisé pour l'échange de données dans le format de données Ethernet (Protocole Ethernet).
